# EUROPÄISCHE PATENTSCHRIFT

(11) **EP 3 921 194 B1**
(45) Veröffentlichungstag und Bekanntmachung des Hinweises auf die Patenterteilung: **23.08.2023**
(21) Anmeldenummer: 20714875.0
(22) Anmeldetag: 10.03.2020
(51) Int. Cl.: B60H 1/00, F01P 7/10, B60K 11/08, B61D 27/00

(54) **KÜHLGERÄT FÜR EIN FAHRZEUG, FAHRZEUG UND VERFAHREN ZUM BETREIBEN EINES KÜHLGERÄTS**
COOLING UNIT FOR A VEHICLE, VEHICLE, AND METHOD FOR OPERATING A COOLING UNIT
APPAREIL DE REFROIDISSEMENT POUR UN VÉHICULE, VÉHICULE ET PROCÉDÉ DE FONCTIONNEMENT D'UN APPAREIL DE REFROIDISSEMENT

(30) Priorität: 09.04.2019 DE 102019205084
(43) Veröffentlichungstag der Anmeldung: 15.12.2021
(73) Patentinhaber: Siemens Mobility GmbH, 81739 München (DE)
(72) Erfinder: TAYLAN, Yüksel, 47551 Bedburg-Hau (DE)
(74) Vertreter: Siemens Patent Attorneys
(86) Internationale Anmeldenummer: PCT/EP2020/056315
(87) Internationale Veröffentlichungsnummer: WO 2020/207682

(56) Entgegenhaltungen:
- WO-A1-2015/129348
- WO-A1-2016/079938
- DE-A1-102014 219 747
- GB-A- 2 566 743
- JP-A- H08 260 969

## Beschreibung

Die Erfindung betrifft ein Kühlgerät für ein Fahrzeug, welches einen Verdampfer, einen Verflüssiger, einen Lüfter und einen Kanal mit einer Einlassöffnung aufweist, nach dem Oberbegriff von Anspruch 1. Eine Strömungsrichtung für Luft aus der Umgebung durch den Kanal hindurch ist vorgegeben. Im Kanal sind der Verflüssiger und in Strömungsrichtung der Luft nach dem Verflüssiger der Lüfter angeordnet.

Ein solches Kühlgerät, ausgeführt als Motorkühlung, ist aus der WO 2016/079938 A1 bekannt.

Üblicherweise wird ein Luftstrom durch den Kanal hindurch geführt. Mittels des Luftstroms durch den Kanal hindurch ist Abwärme vom Verflüssiger abführbar.

Wird das Kühlgerät in einem Fahrzeug verwendet, so ist der von außen an die Einlassöffnung anliegende Umgebungsdruck üblicherweise abhängig von der Geschwindigkeit des Fahrzeugs. In diesem Fall hat der Umgebungsdruck einen statischen Anteil und einen dynamischen Anteil.

Ist der Umgebungsdruck zu hoch, so kann eine kritische Situation eintreten, bei welcher der Lüfter durch den Luftstrom angetrieben wird. Da der Lüfter in der Regel nicht für diese Situation ausgelegt ist, ist der Antrieb des Lüfters durch den Luftstrom zu vermeiden, um Schäden am Lüfter und/oder an der Elektronik zu vermeiden.

Eine Aufgabe der Erfindung ist es, ein verbessertes Kühlgerät für ein Fahrzeug bereitzustellen, mittels welchem kritische Situationen für den Lüfter zumindest reduziert, insbesondere vermieden, werden.

Die Aufgabe wird gelöst durch ein Kühlgerät der eingangs genannten Art, welches erfindungsgemäß eine Steuereinheit aufweist, welche dazu eingerichtet ist, die Stellung des Verschlusselements in Abhängigkeit einer Druckdifferenz zwischen einem an der Einlassöffnung von außen anliegenden Umgebungsdruck und einem im Kanal in Strömungsrichtung nach dem Lüfter herrschenden Ausgangsdruck und/oder in Abhängigkeit einer Druckdifferenz zwischen einem im Kanal in Strömungsrichtung vor dem Verflüssiger herrschenden Eingangsdruck und dem im Kanal in Strömungsrichtung nach dem Lüfter herrschenden Ausgangsdruck zu steuern.

Auf diese Weise kann der Bypass-Kanal für die Luftströmung zuschaltbar sein. Insbesondere kann der Bypass-Kanal zur Verringerung einer Druckdifferenz zwischen einem im Kanal in Strömungsrichtung der Luft vor dem Verflüssiger herrschenden Eingangsdruck und einem im Kanal in Strömungsrichtung der Luft nach dem Lüfter herrschenden Ausgangsdruck verwendet werden.

Insbesondere kann auf diese Weise eine kritische Situation, bei welcher der Lüfter durch den Luftstrom angetrieben wird, vermieden werden.

Zweckmäßigerweise ist das Verschlusselement in seiner Geschlossen-Stellung geschlossen. Weiter ist es zweckmäßig, wenn das Verschlusselement in seiner Geschlossen-Stellung den Bypass-Kanal verschließt. Sinnvollerweise verhindert das Verschlusselement in seiner Geschlossen-Stellung eine Luftströmung durch den Bypass-Kanal hindurch.

Zweckmäßigerweise ist das Verschlusselement in seiner Offen-Stellung geöffnet. Insbesondere kann das Verschlusselement in seiner Offen-Stellung teilweise oder vollständig geöffnet sein. Weiter ist es zweckmäßig, wenn das Verschlusselement in seiner Offen-Stellung den Bypass-Kanal nicht verschließt. Sinnvollerweise ermöglicht das Verschlusselement in seiner Offen-Stellung eine Luftströmung durch den Bypass-Kanal hindurch.

Zweckmäßigerweise wird dann, wenn sich das Verschlusselement in seiner Offen-Stellung befindet, ein Luftstrom von dem in Strömungsrichtung der Luft vor dem Verflüssiger angeordneten Abschnitt des Kanals durch den Bypass-Kanal, insbesondere über das Verschlusselement, in den in Strömungsrichtung der Luft nach dem Lüfter angeordneten Abschnitt des Kanals hinein ermöglicht.

Insbesondere dann, wenn sich das Verschlusselement in seiner Offen-Stellung befindet, kann der Bypass-Kanal für die Luftströmung einen Bypass zumindest um den Lüfter zur Verfügung stellen. Insbesondere dann, wenn sich das Verschlusselement in seiner Offen-Stellung befindet, kann der Bypass-Kanal für die Luftströmung insbesondere einen Bypass um den Verflüssiger und um den Lüfter zur Verfügung stellen.

Der Bypass-Kanal weist zweckmäßigerweise eine Auslassöffnung auf. Weiter ist es zweckmäßig, wenn der Bypass-Kanal an seiner Auslassöffnung in den in Strömungsrichtung der Luft nach dem Lüfter angeordneten Abschnitt des Kanals mündet.

Es ist bevorzugt, wenn das Verschlusselement an der Auslassöffnung des Bypass-Kanals angeordnet ist. Mit anderen Worten: Das Verschlusselement kann an der Mündung des Bypass-Kanals in den in Strömungsrichtung der Luft nach dem Lüfter angeordneten Abschnitt des Kanals angeordnet sein.

Prinzipiell kann das Verschlusselement auch an einer anderen Position in dem Bypass-Kanal angeordnet sein.

Es ist vorteilhaft, wenn ein Öffnungsquerschnitt des Verschlusselements einstellbar ist.

Vorzugsweise ist das Verschlusselement als Bypass-Klappe ausgebildet.

Das Verschlusselement kann z. B. als eine Lamellenklappe ausgeführt sein. Weiter kann die Bypassklappe beispielsweise als eine Schieber-Klappe, als eine Irisklappe, als eine Spionklappe, als eine Hubklappe, als ein Drehgitter oder anderweitig ausgeführt sein.

Weiter kann das Verschlusselement als Ventil ausgebildet sein. Beispielsweise kann das Verschlusselement als Überdruckventil, insbesondere als Proportionalsventil, ausgebildet sein.

Weiter kann das Verschlusselement als Gasdruckregler oder anderweitig ausgebildet sein.

Zweckmäßigerweise herrscht im Kanal in Strömungsrichtung vor dem Verflüssiger ein Eingangsdruck. Weiter ist es zweckmäßig, wenn im Kanal in Strömungsrichtung nach dem Lüfter ein Ausgangsdruck herrscht.

Vorteilhafterweise liegt an einer Seite des Verschlusselements der Eingangsdruck an. Weiter ist es vorteilhaft, wenn an der anderen Seite des Verschlusselements der Ausgangsdruck anliegt. Zweckmäßigerweise sind die beiden Seiten des Verschlusselements einander entgegengesetzte Seiten.

Es ist sinnvoll, wenn an der Einlassöffnung von außen ein Umgebungsdruck anliegt.

Vorteilhafterweise umfasst das Kühlgerät eine Steuereinheit.

Vorzugsweise ist die Steuereinheit dazu eingerichtet, die Stellung des Verschlusselements in Abhängigkeit einer Druckdifferenz zwischen dem Umgebungsdruck und dem Ausgangsdruck zu steuern.

Weiter kann die Steuereinheit dazu eingerichtet sein, die Stellung des Verschlusselements in Abhängigkeit einer Druckdifferenz zwischen dem Eingangsdruck und dem Ausgangsdruck zu steuern.

Insbesondere kann die Steuereinheit dazu eingerichtet sein, den Öffnungsquerschnitt des Verschlusselements zu steuern.

Das Kühlgerät kann ein Kühlgerät für ein technisches Gerät sein, welches im Betrieb Abwärme erzeugt. Beispielsweise kann das Kühlgerät ein Kühlgerät für einen Stromrichter, für einen Transformator oder für ein anderes technisches Gerät sein.

Weiter kann das Kühlgerät als Klimagerät ausgeführt sein. Beispielsweise kann das Klimagerät ein Klimagerät für eine Klimaanlage sein. Insbesondere kann das Klimagerät als Klimagerät einer Klimaanlage verwendet werden. Weiter kann das Klimagerät zur Temperierung eines Innenraums verwendet werden.

Ferner ist die Erfindung gerichtet auf ein Fahrzeug nach Anspruch 7 mit dem zuvor genannten Kühlgerät und/oder einer seiner Weiterbildungen.

Das Fahrzeug kann beispielsweise ein Schienenfahrzeug sein. Bei Schienenfahrzeugen kann der Umgebungsdruck einen besonders hohen dynamischen Anteil aufweisen, sodass hier der Einsatz des erfindungsgemäßen Kühlgeräts besonders vorteilhaft ist.

Das Fahrzeug kann eine Steuereinheit aufweisen. Die letztgenannte Steuereinheit kann die zuvor genannte Steuereinheit des Kühlgeräts sein.

Die Steuereinheit kann dazu eingerichtet sein, die Stellung des Verschlusselements in Abhängigkeit einer Geschwindigkeit des Fahrzeugs zu steuern.

Weiter ist die Erfindung gerichtet auf ein Verfahren nach Anspruch 9 zum Betreiben eines Kühlgeräts. Das Kühlgerät weist einen Verdampfer, einen Verflüssiger, einen Lüfter und einen Kanal mit einer Einlassöffnung auf. Es ist eine Strömungsrichtung für Luft durch den Kanal hindurch vorgegeben. Der Verflüssiger ist im Kanal angeordnet. Im Kanal ist außerdem in Strömungsrichtung der Luft nach dem Verflüssiger der Lüfter angeordnet. Luft aus der Umgebung wird über die Einlassöffnung in den Kanal hinein und durch den Kanal hindurch geleitet.

Erfindungsgemäß ist in einem Bypass-Kanal des Kühlgeräts ein Verschlusselement angeordnet. Erfindungsgemäß wird dann, wenn das Verschlusselement geöffnet ist, Luft aus dem in Strömungsrichtung der Luft vor dem Verflüssiger angeordneten Abschnitt des Kanals durch den Bypass-Kanal hindurch in den in Strömungsrichtung der Luft nach dem Lüfter angeordneten Abschnitt des Kanals geführt.

Auf diese Weise kann eine kritische Situation, bei welcher der Lüfter durch den Luftstrom angetrieben wird, vermieden werden.

Das im Zusammenhang mit dem Verfahren genannte Kühlgerät kann das zuvor genannte Kühlgerät sein. Die im Zusammenhang mit dem Verfahren genannten Elemente können außerdem die zuvor erwähnten Elemente sein.

Zweckmäßigerweise umgeht die durch den Bypass-Kanal geführte/geleitete Luft zumindest den Lüfter. Insbesondere ist es bevorzugt, wenn die durch den Bypass-Kanal geleitete Luft den Verflüssiger und den Lüfter umgeht.

Das heißt, dass die durch den Bypass-Kanal geleitete Luft vorzugsweise zumindest nicht durch den Lüfter, insbesondere nicht durch den Verflüssiger und nicht durch den Lüfter, geleitet wird.

Weiter ist es zweckmäßig, wenn bei geöffnetem Verschlusselement derjenige Luftstrom, der durch den Lüfter hindurch geht, reduziert wird. Insbesondere kann bei geöffnetem Verschlusselement der Luftstrom durch den Verflüssiger und durch den Lüfter hindurch reduziert werden.

Auf diese Weise kann bei geöffnetem Verschlusselement ein reduzierter Luftstrom durch den Lüfter hindurch geleitet werden.

Auf diese Weise kann ein Antreiben des Lüfters vermieden werden. Weiter kann auf diese Weise der Lüfter geschont werden.

Als "reduzierter Luftstrom" (bzw. als "Luftstrom wird reduziert") kann ein Luftstrom aufgefasst werden, der geringer als vorher ist, der aber messbar über Null ist. Zweckmäßigerweise unterscheidet sich der reduzierte Luftstrom von einem unterbrochenen Luftstrom. Das heißt, wenn der Luftstrom reduziert wird, wird er zweckmäßigerweise nicht unterbrochen.

Zweckmäßigerweise herrscht im Kanal in Strömungsrichtung vor dem Verflüssiger ein Eingangsdruck. Weiter ist es zweckmäßig, wenn im Kanal in Strömungsrichtung nach dem Lüfter ein Ausgangsdruck herrscht. Außerdem ist es zweckmäßig, wenn an der Einlassöffnung von außen ein Umgebungsdruck anliegt.

Es ist bevorzugt, wenn das Verschlusselement in Abhängigkeit einer Druckdifferenz zwischen dem Umgebungsdruck und dem Ausgangsdruck geöffnet und/oder geschlossen wird.

Ferner kann das Verschlusselement in Abhängigkeit einer Druckdifferenz zwischen dem Eingangsdruck und dem Ausgangsdruck geöffnet und/oder geschlossen werden.

Liegt beispielsweise die erstgenannte oder die letztgenannte Druckdifferenz über einem vorgegebenen Grenzwert, wird vorzugsweise das Verschlusselement geöffnet (oder bleibt geöffnet) .

Liegt beispielsweise die erstgenannte oder die letztgenannte Druckdifferenz unter einem vorgegebenen Grenzwert, wird vorzugsweise das Verschlusselement geschlossen (oder bleibt geschlossen) .

Insbesondere kann das Verschlusselement zur Verringerung der Druckdifferenz zwischen dem Eingangsdruck und dem Ausgangsdruck geöffnet werden.

Es ist vorteilhaft, wenn beim Öffnen des Verschlusselements ein Öffnungsquerschnitt des Verschlusselements eingestellt wird.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren, dem erfindungsgemäßen Kühlgerät und dem erfindungsgemäßen Fahrzeug kombinierbar. So sind Verfahrensmerkmale auch als Eigenschaft der entsprechenden Vorrichtungseinheit gegenständlich formuliert zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: ein Kühlgerät mit einem Kanal und einem Bypass-Kanal, und
- FIG 2: ein Fahrzeug mit einem Kühlgerät aus FIG 1.

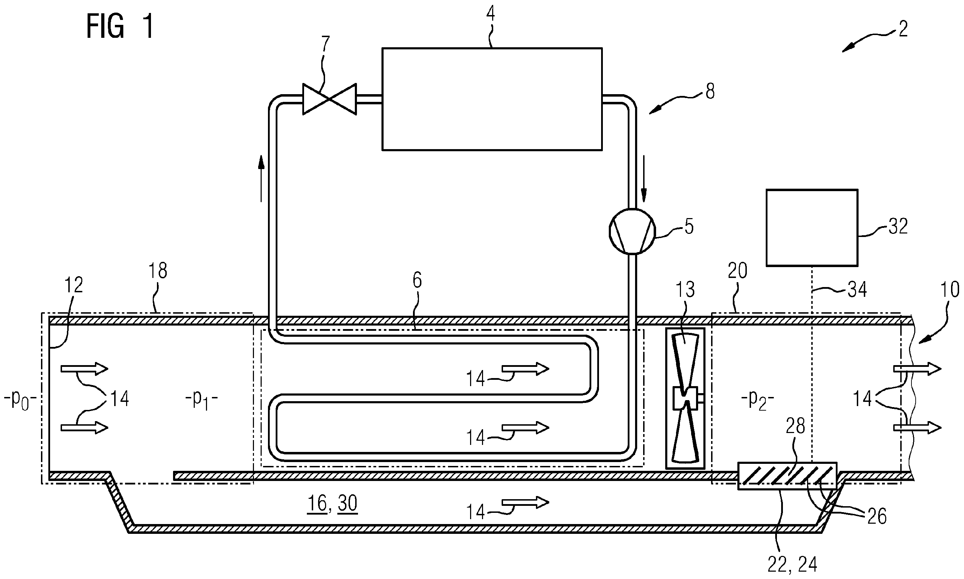

FIG 1 zeigt schematisch ein Kühlgerät 2 für ein Fahrzeug.

Das Kühlgerät 2 weist einen Verdampfer 4, einen Verdichter 5, einen Verflüssiger 6 und ein Expansionsventil 7 auf.

Der Verdampfer 4 ist einerseits über den Verdichter 5 und andererseits über das Expansionsventil 7 mit dem Verflüssiger 6 zu einem Kältemittelkreislauf 8 verbunden.

Im Betrieb des Kühlgeräts 2 führt der Kältemittelkreislauf 8 ein Kältemittel.

Der Betrieb des Kühlgeräts 2 wird im Folgenden kurz umrissen: Das Kältemittel verdampft in dem Verdampfer 4, wobei das Kältemittel thermische Energie aufnimmt. Dann wird das Kältemittel über den Verdichter 5 in den Verflüssiger 6 geführt. In dem Verflüssiger 6 kühlt das Kältemittel ab und kondensiert aus, wobei das Kältemittel thermische Energie in Form von Abwärme abgibt. Das Kältemittel wird dann über das Expansionsventil 7 wieder in den Verdampfer 4 geführt.

Das Kühlgerät 2 weist außerdem einen Kanal 10 mit einer Einlassöffnung 12 auf. Weiter weist das Kühlgerät 2 einen im Kanal 10 angeordneten Lüfter 13 auf.

Luft 14 kann durch den Kanal 10 hindurch strömen. Mittels des Luftstroms 14 durch den Kanal 10 hindurch kann die Abwärme vom Verflüssiger 6 abgeführt werden. Dabei ist eine Strömungsrichtung für Luft 14 durch den Kanal hindurch vorgegeben. Die Luftströmung 14 durch den Kanal hindurch ist in FIG 1 mittels Pfeilen dargestellt.

Der Verflüssiger 6 ist im Kanal 10 angeordnet. Außerdem ist der Lüfter 13 in Strömungsrichtung der Luft 14 nach dem Verflüssiger 6 angeordnet.

Weiter umfasst das Kühlgerät 2 einen Bypass-Kanal 16, der den in Strömungsrichtung der Luft 14 vor dem Verflüssiger 6 angeordneten Abschnitt 18 des Kanals 10 mit dem in Strömungsrichtung der Luft 14 nach dem Lüfter 13 angeordneten Abschnitt 20 des Kanals 10 strömungstechnisch verbindet. Der Bypass-Kanal 16 ist zu dem Kanal 10 separat.

Außerdem umfasst das Kühlgerät 2 ein Verschlusselement 22, welches in dem Bypass-Kanal 16 angeordnet ist. Das Verschlusselement 22 ist zwischen einer Offen-Stellung und einer Geschlossen-Stellung verstellbar. In FIG 1 ist das Verschlusselement 22 in seiner Offen-Stellung gezeigt.

Das Verschlusselement 22 ist in diesem Beispiel als Bypass-Klappe 24 ausgebildet. Beispielhaft ist die Bypass-Klappe 24 hier als Lamellenklappe ausgeführt. Prinzipiell könnte das Verschlusselement 22 auch anderes ausgebildet sein.

Das Verschlusselement 22 weist einen Öffnungsquerschnitt auf, der einstellbar ist.

In diesem Ausführungsbeispiel ist der Öffnungsquerschnitt der als Lamellenklappe ausgeführten Bypass-Klappe 24 einstellbar, indem die Stellung der Lamellen 26 der Bypass-Klappe 24 veränderbar ist.

Der Bypass-Kanal 16 weist eine Auslassöffnung 28 auf. Der Bypass-Kanal 16 mündet an seiner Auslassöffnung 28 in den in Strömungsrichtung der Luft 14 nach dem Lüfter 13 angeordneten Abschnitt 20 des Kanals 10.

Das Verschlusselement 22 ist an der Auslassöffnung 28 des Bypass-Kanals 16 angeordnet.

An der Einlassöffnung 12 liegt von außen ein Umgebungsdruck p₀ an.

Im Kanal 10 herrscht in Strömungsrichtung vor dem Verflüssiger 6 ein Eingangsdruck p₁. Weiter herrscht im Kanal 10 in Strömungsrichtung nach dem Lüfter 13 ein Ausgangsdruck p₂. An einer Seite des Verschlusselements 22 liegt der Eingangsdruck p₁ an und an der anderen Seite des Verschlusselements 22 liegt der Ausgangsdruck p₂ an.

Die Drücke Umgebungsdruck p₀, Eingangsdruck p₁ und/oder Ausgangsdruck p₂ können jeweils mittels Druckmessgeräten ermittelt werden (nicht gezeigt).

Der Bypass-Kanal 16 wird - zumindest zeitweise - zur Verringerung der Druckdifferenz zwischen dem Eingangsdruck p₁ und dem Ausgangsdruck p₂ verwendet. Insbesondere kann auf diese Weise eine kritische Situation, bei welcher der Lüfter 13 durch den Luftstrom 14 angetrieben wird, vermieden werden.

Dann, wenn das Verschlusselement 22 geschlossen ist, wird eine Luftströmung durch den Bypass-Kanal hindurch verhindert (nicht dargestellt).

Dann, wenn sich das Verschlusselement 22 in seiner Offen-Stellung befindet (wie dargestellt), stellt der Bypass-Kanal 16 für die Luftströmung 14 einen Bypass 30 um den Verflüssiger 6 und um den Lüfter 13 zur Verfügung.

Dann, wenn das Verschlusselement 22 geöffnet ist, wird Luft 14 aus dem in Strömungsrichtung der Luft 14 vor dem Verflüssiger 6 angeordneten Abschnitt 18 des Kanals 10 durch den Bypass-Kanal 16 hindurch in den in Strömungsrichtung der Luft 14 nach dem Lüfter 13 angeordneten Abschnitt 20 geführt.

Die durch den Bypass-Kanal 16 geleitete Luft 14 umgeht den Verflüssiger 6 und den Lüfter 13.

Auf diese Weise wird bei geöffnetem Verschlusselement 22 derjenige Luftstrom 14, der durch den Lüfter 13 hindurch geht, reduziert. Das heißt, bei geöffnetem Verschlusselement 22 wird nur noch ein reduzierter Luftstrom 14 durch den Lüfter 13 hindurchgeführt.

Mittels der durch den Bypass-Kanal 16 geleiteten Luft 14 wird außerdem die Druckdifferenz zwischen dem Eingangsdruck p₁ und dem Ausgangsdruck p₂ verringert.

Ferner weist das Kühlgerät 2 eine Steuereinheit 32 auf. Die Steuereinheit 32 ist über eine Datenverbindung 34 mit dem Verschlusselement 22 verbunden. Ferner kann die Steuereinheit 32 mit den zuvor genannten Druckmessgeräten über eine Datenverbindung verbunden sein (nicht gezeigt).

Die Steuereinheit 32 ist dazu eingerichtet, die Stellung des Verschlusselements 22 zu steuern. Insbesondere kann die Steuereinheit 32 das Verschlusselement 22 öffnen und/oder schließen. Weiter kann die Steuereinheit 32 (in der Offen-Stellung des Verschlusselements 22) den Öffnungsquerschnitt des Verschlusselements 22 einstellen.

Die Steuereinheit 32 ist in diesem Beispiel dazu eingerichtet, die Stellung des Verschlusselements 22 in Abhängigkeit der Druckdifferenz zwischen dem Eingangsdruck p₁ und dem Ausgangsdruck p₂ zu steuern. Prinzipiell könnte die Steuereinheit 32 auch dazu eingerichtet sein, die Stellung des Verschlusselements 22 in Abhängigkeit der Druckdifferenz zwischen dem Umgebungsdruck p₀ und dem Ausgangsdruck p₂ zu steuern.

Das heißt, dass das Verschlusselement 22 in diesem Beispiel in Abhängigkeit der Druckdifferenz zwischen dem Eingangsdruck p₁ und dem Ausgangsdruck p₂ (im Folgenden auch nur als Druckdifferenz bezeichnet) geöffnet und/oder geschlossen wird. Weiter wird der Öffnungsquerschnitt des Verschlusselements 22 in Abhängigkeit der Druckdifferenz zwischen dem Eingangsdruck p₁ und dem Ausgangsdruck p₂ eingestellt.

Liegt beispielsweise die Druckdifferenz über einem vorgegebenen oberen Grenzwert, wird das Verschlusselement 22 geöffnet (oder bleibt geöffnet).

Durch das Öffnen des Verschlusselements 22 verringert sich die Druckdifferenz.

Insbesondere wird der Öffnungsquerschnitt des Verschlusselements 22 derart eingestellt, dass die Druckdifferenz in einem vorgegebenen Idealbereich liegt.

Sinkt die Druckdifferenz unter einen vorgegebenen unteren Grenzwert, wird das Verschlusselement 22 geschlossen (sofern es noch nicht geschlossen ist).

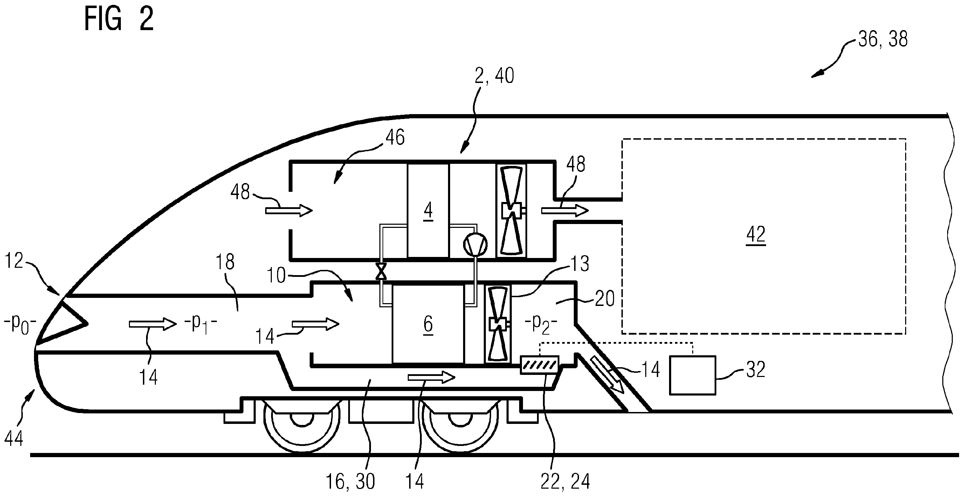

FIG 2 zeigt schematisch ein Fahrzeug 36 mit dem Kühlgerät 2 aus FIG 1.

Die nachfolgende Beschreibung beschränkt sich im Wesentlichen auf die Unterschiede zum Ausführungsbeispiel aus FIG 1, auf das bezüglich gleich bleibender Merkmale und Funktionen verwiesen wird. Im Wesentlichen gleich bleibende Elemente werden grundsätzlich mit den gleichen Bezugszeichen bezeichnet und nicht erwähnte Merkmale sind in das folgende Ausführungsbeispiel übernommen, ohne dass sie erneut beschrieben sind.

Das Fahrzeug 36 ist beispielhaft als Schienenfahrzeug 38 ausgebildet. Schienenfahrzeuge können hohe Geschwindigkeiten von über 250 km/h oder von über 300 km/h fahren. Deshalb kann der dynamische Anteil des Umgebungsdrucks bei Schienenfahrzeugen höher als bei anderen Fahrzeugen sein. Besonders bei Schienenfahrzeugen besteht damit die Gefahr, dass der Lüfter angetrieben wird, was es zu vermeiden gilt.

Das Kühlgerät 2 aus FIG 1 ist in diesem Beispiel als Klimagerät 40 ausgeführt. Das als Klimagerät 40 ausgeführte Kühlgerät 2 kann ein Klimagerät 40 zur Klimatisierung eines Innenraums 42 des Fahrzeugs 36 sein.

Insbesondere ist das Klimagerät 40 im vorderen Bereich des Fahrzeugs 36 angeordnet. Beispielsweise kann das als Klimagerät 40 ausgeführte Kühlgerät 2 ein Klimagerät 40 für einen als Führerraum ausgeführten Innenraum 42 sein.

Die Einlassöffnung 12 des Kanals 10 kann beispielsweise (wie hier schematisch dargestellt) als ein oder mehrere Spalte ausgeführt und im Bug 44 des Fahrzeugs 36 angeordnet sein.

Der Umgebungsdruck p₀ ist von der Geschwindigkeit des Fahrzeugs 36 abhängig. Je höher die Geschwindigkeit des Fahrzeugs 36 ist, desto höher ist auch der dynamische Anteil des Umgebungsdrucks p₀. Außerdem kann der Umgebungsdruck p₀ von Windverhältnissen abhängig sein.

Aufgrund des Strömungswiderstands der Einlassöffnung 12 ist der Eingangsdruck p₁ geringer als der Umgebungsdruck p₀. Allerdings ist der Eingangsdruck p₁ abhängig von dem Umgebungsdruck p₀. Je höher der Umgebungsdruck p₀ ist, desto höher ist auch der Eingangsdruck p₁.

Die Steuereinheit 32 des Kühlgeräts 2 kann dazu eingerichtet sein, die Stellung des Verschlusselements 22 in Abhängigkeit der Geschwindigkeit des Fahrzeugs 36 zu steuern. Beispielsweise kann das Verschlusselement 22 dann, wenn die Geschwindigkeit des Fahrzeugs 36 unter einer vorgegebenen Mindestgeschwindigkeit liegt, das Verschlusselement 22 geschlossen sein/bleiben.

Das als Klimagerät 40 ausgeführte Kühlgerät 2 weist ferner einen Klimakanal 46 auf. Der Verdampfer 4 ist in dem Klimakanal 46 angeordnet.

Der Verdampfer 4 kühlt durch den Klimakanal 46 hindurch geführte (Frisch- und/oder Um-)Luft 48. Die im Klimakanal 46 gekühlte Luft 48 wird dann dem Innenraum 42 des Fahrzeugs 36 zugeführt.

## Patentansprüche

1. Kühlgerät (2) für ein Fahrzeug (36),
welches einen Verdampfer (4), einen Verflüssiger (6), einen Lüfter (13) und einen Kanal (10) mit einer Einlassöffnung (12) aufweist,
wobei eine Strömungsrichtung für Luft (14) durch den Kanal (10) hindurch vorgegeben ist,
wobei im Kanal (10) der Verflüssiger (6) und in Strömungsrichtung der Luft (14) nach dem Verflüssiger (6) der Lüfter (13) angeordnet sind,
ein Bypass-Kanal (16) vorgesehen ist, der den in Strömungsrichtung der Luft (14) vor dem Verflüssiger (6) angeordneten Abschnitt (18) des Kanals (10) mit dem in Strömungsrichtung der Luft (14) nach dem Lüfter (13) angeordneten Abschnitt (20) des Kanals (10) strömungstechnisch verbindet,
ein Verschlusselement (22) vorgesehen ist, welches in dem Bypass-Kanal (16) angeordnet ist, wobei das Verschlusselement (22) zwischen einer Offen-Stellung und einer Geschlossen-Stellung verstellbar ist, und
dann, wenn sich das Verschlusselement (22) in seiner Offen-Stellung befindet, der Bypass-Kanal (16) für die Luftströmung (14) einen Bypass (30) um den Verflüssiger (6) und um den Lüfter (13) zur Verfügung stellt,
**gekennzeichnet durch**
eine Steuereinheit (32), welche dazu eingerichtet ist, die Stellung des Verschlusselements (22)
in Abhängigkeit einer Druckdifferenz zwischen einem an der Einlassöffnung (12) von außen anliegenden Umgebungsdruck (p₀) und einem im Kanal (10) in Strömungsrichtung nach dem Lüfter (13) herrschenden Ausgangsdruck (p₂) und/oder
in Abhängigkeit einer Druckdifferenz zwischen einem im Kanal (10) in Strömungsrichtung vor dem Verflüssiger (6) herrschenden Eingangsdruck (p₁) und dem im Kanal (10) in Strömungsrichtung nach dem Lüfter (13) herrschenden Ausgangsdruck (p₂) zu steuern.

2. Kühlgerät (2) nach Anspruch 1,
**dadurch gekennzeichnet, dass**
der Bypass-Kanal (16) an seiner Auslassöffnung (28) in den in Strömungsrichtung der Luft (14) nach dem Lüfter (13) angeordneten Abschnitt (20) des Kanals (10) mündet und
das Verschlusselement (22) an der Auslassöffnung (28) des Bypass-Kanals (16) angeordnet ist.

3. Kühlgerät (2) nach einem der vorhergehenden Ansprüche,
**dadurch gekennzeichnet, dass**
ein Öffnungsquerschnitt des Verschlusselements (22) einstellbar ist.

4. Kühlgerät (2) nach einem der vorhergehenden Ansprüche,
**dadurch gekennzeichnet, dass**
das Verschlusselement (22) als Bypass-Klappe (24) ausgebildet ist.

5. Kühlgerät (2) nach einem der vorhergehenden Ansprüche,
**dadurch gekennzeichnet, dass**
im Kanal (10) in Strömungsrichtung vor dem Verflüssiger (6) ein Eingangsdruck (p₁) herrscht und im Kanal (10) in Strömungsrichtung nach dem Lüfter (13) ein Ausgangsdruck (p₂) herrscht,
wobei an einer Seite des Verschlusselements (22) der Eingangsdruck (p₁) anliegt und an der anderen Seite des Verschlusselements (22) der Ausgangsdruck (p₂) anliegt.

6. Kühlgerät (2) nach einem der vorhergehenden Ansprüche, welches als Klimagerät (40) ausgeführt ist.

7. Fahrzeug (36), insbesondere Schienenfahrzeug (38), mit einem Kühlgerät (2) nach einem der vorhergehenden Ansprüche.

8. Fahrzeug (36) nach Anspruch 7,
**gekennzeichnet durch**
eine Steuereinheit (32), welche dazu eingerichtet ist, die Stellung des Verschlusselements (22) in Abhängigkeit einer Geschwindigkeit des Fahrzeugs (36) zu steuern.

9. Verfahren zum Betreiben eines Kühlgeräts (2),
welches einen Verdampfer (4), einen Verflüssiger (6), einen Lüfter (13) und einen Kanal (10) mit einer Einlassöffnung (12) aufweist,
wobei eine Strömungsrichtung für Luft (14) durch den Kanal (10) hindurch vorgegeben ist,
wobei im Kanal (10) der Verflüssiger (6) und in Strömungsrichtung der Luft (14) nach dem Verflüssiger (6) der Lüfter (13) angeordnet ist,
wobei Luft (14) aus der Umgebung über die Einlassöffnung (12) in den Kanal (10) hinein und durch den Kanal (10) hindurch geleitet wird,
in einem Bypass-Kanal (16) des Kühlgeräts (2) ein Verschlusselement (22) angeordnet ist und dann, wenn das Verschlusselement (22) geöffnet ist, Luft (14) aus dem in Strömungsrichtung der Luft (14) vor dem Verflüssiger (6) angeordneten Abschnitt (18) des Kanals (10) durch den Bypass-Kanal (16) hindurch in den in Strömungsrichtung der Luft (14) nach dem Lüfter (13) angeordneten Abschnitt (20) des Kanals (10) geführt wird,
die durch den Bypass-Kanal (16) geführte Luft den Verflüssiger (6) und den Lüfter (13) umgeht,
**dadurch gekennzeichnet, dass**
das Verschlusselement (22)
in Abhängigkeit einer Druckdifferenz zwischen einem an der Einlassöffnung (12) von außen anliegenden Umgebungsdruck (p₀) und einem im Kanal (10) in Strömungsrichtung nach dem Lüfter (13) herrschenden Ausgangsdruck (p₂) und/oder
in Abhängigkeit einer Druckdifferenz zwischen einem im Kanal (10) in Strömungsrichtung vor dem Verflüssiger (6) herrschenden Eingangsdruck (p₁) und dem im Kanal (10) in Strömungsrichtung nach dem Lüfter (13) herrschenden Ausgangsdruck (p₂) geöffnet und/oder geschlossen wird.

10. Verfahren nach Anspruch 9,
**dadurch gekennzeichnet, dass**
bei geöffnetem Verschlusselement (22) derjenige Luftstrom (14), der durch den Lüfter (13) hindurch geht, reduziert wird.

11. Verfahren nach einem der Ansprüche 9 oder 10,
**dadurch gekennzeichnet, dass**
beim Öffnen des Verschlusselements (22) ein Öffnungsquerschnitt des Verschlusselements (22) eingestellt wird.

## Claims

1. Cooling unit (2) for a vehicle (36),
having an evaporator (4), a condenser (6), a fan (13) and a channel (10) with an inlet opening (12),
wherein a flow direction for air (14) through the channel (10) is predefined,
wherein arranged in the channel (10) are the condenser (6) and, after the condenser (6) in the flow direction of the air (14), the fan (13),
provision being made of a bypass channel (16) which connects in terms of flow that portion (18) of the channel (10) which is arranged before the condenser (6) in the flow direction of the air (14) to that portion (20) of the channel (10) which is arranged after the fan (13) in the flow direction of the air (14),
provision being made of a closure element (22) which is arranged in the bypass channel (16), wherein the closure element (22) is adjustable between an open position and a closed position, and,
when the closure element (22) is in its open position, the bypass channel (16) for the air flow (14) providing a bypass (30) around the condenser (6) and around the fan (13), **characterized by**
a control unit (32) which is configured to control the position of the closure element (22)
in a manner dependent on a pressure difference between an ambient pressure (p₀) prevailing at the inlet opening (12) from the outside and an exit pressure (p₂) prevailing in the channel (10) after the fan (13) in the flow direction, and/or
in a manner dependent on a pressure difference between an entry pressure (p₁) prevailing in the channel (10) before the condenser (6) in the flow direction and the exit pressure (p₂) prevailing in the channel (10) after the fan (13) in the flow direction.

2. Cooling unit (2) according to Claim 1,
**characterized in that**
the bypass channel (16) opens out at its outlet opening (28) into that portion (20) of the channel (10) which is arranged after the fan (13) in the flow direction of the air (14), and the closure element (22) is arranged at the outlet opening (28) of the bypass channel (16).

3. Cooling unit (2) according to either of the preceding claims,
**characterized in that**
an opening cross section of the closure element (22) is settable.

4. Cooling unit (2) according to one of the preceding claims,
**characterized in that**
the closure element (22) is in the form of a bypass flap (24).

5. Cooling unit (2) according to one of the preceding claims,
**characterized in that**
an entry pressure (p₁) prevails in the channel (10) before the condenser (6) in the flow direction, and an exit pressure (p₂) prevails in the channel (10) after the fan (13) in the flow direction,
wherein the entry pressure (p₁) prevails on one side of the closure element (22), and the exit pressure (p₂) prevails on the other side of the closure element (22).

6. Cooling unit (2) according to one of the preceding claims,
which is in the form of an air-conditioning unit (40).

7. Vehicle (36), in particular a rail vehicle (38), having a cooling unit (2) according to one of the preceding claims.

8. Vehicle (36) according to Claim 7,
**characterized by**
a control unit (32) which is configured to control the position of the closure element (22) in a manner dependent on a speed of the vehicle (36).

9. Method for operating a cooling unit (2),
having an evaporator (4), a condenser (6), a fan (13) and a channel (10) with an inlet opening (12),
wherein a flow direction for air (14) through the channel (10) is predefined,
wherein arranged in the channel (10) are the condenser (6) and, after the condenser (6) in the flow direction of the air (14), the fan (13),
wherein air (14) is guided from the surroundings into the channel (10) via the inlet opening (12) and through the channel (10),
a closure element (22) being arranged in a bypass channel (16) of the cooling unit (2), and, when the closure element (22) is open, air (14) being conducted from that portion (18) of the channel (10) which is arranged before the condenser (6) in the flow direction of the air (14) into that portion (20) of the channel (10) which is arranged after the fan (13) in the flow direction of the air (14) through the bypass channel (16),
the air conducted through the bypass channel (16) bypassing the condenser (6) and the fan (13),
**characterized in that**
the closure element (22) is opened and/or closed
in a manner dependent on a pressure difference between an ambient pressure (p₀) prevailing at the inlet opening (12) from the outside and an exit pressure (p₂) prevailing in the channel (10) after the fan (13) in the flow direction, and/or
in a manner dependent on a pressure difference between an entry pressure (p₁) prevailing in the channel (10) before the condenser (6) in the flow direction and the exit pressure (p₂) prevailing in the channel (10) after the fan (13) in the flow direction.

10. Method according to Claim 9,
**characterized in that**,
with the closure element (22) open, that air stream (14) which passes through the fan (13) is reduced.

11. Method according to either of Claims 9 and 10,
**characterized in that**,
when the closure element (22) is opened, an opening cross section of the closure element (22) is set.

## Revendications

1. Appareil (2) de refroidissement pour un véhicule (36),
qui a un évaporateur (4), un condenseur (6), un ventilateur (13) et un conduit (10) ayant une ouverture (12) d'admission,
dans lequel il est prescrit un sens d'écoulement de l'air (14) dans le conduit (10),
dans lequel le condenseur (6) est monté dans le conduit (10) et le ventilateur (13) est monté dans le conduit, dans le sens de l'écoulement de l'air (14), en aval du condenseur (6),
il est prévu un conduit (16) de dérivation, qui met en communication en technique d'écoulement le tronçon (18) du conduit (10) disposé, dans le sens d'écoulement de l'air (14), en amont du condenseur (6) avec le tronçon (20) du conduit (10) disposé, dans le sens d'écoulement de l'air (14), en aval du ventilateur (13),
il est prévu un élément (22) de fermeture, qui est monté dans le conduit (16) de dérivation, dans lequel l'élément (22) de fermeture est réglable entre une position ouverte et une position fermée, et
si l'élément (22) de fermeture se trouve dans sa position ouverte, le conduit (16) de dérivation met à disposition de l'écoulement (14) d'air une dérivation (30) contournant le condenseur (6) et le ventilateur (13),
**caractérisé par**
une unité (32) de commande, qui est agencée pour commander la position de l'élément (22) de fermeture,
en fonction d'une différence de pression entre une pression (p₀) ambiante s'appliquant de l'extérieur à l'ouverture (12) d'admission et une pression (p₂) de sortie régnant dans le conduit (10), dans le sens de l'écoulement en aval du ventilateur (13) et/ou
en fonction d'une différence de pression entre une pression (p₁) d'entrée régnant dans le conduit (10) dans le sens de l'écoulement, en amont du condenseur (6) et la pression (p₂) de sortie régnant dans le conduit (10), dans le sens de l'écoulement, en aval du ventilateur (13).

2. Appareil (2) de refroidissement suivant la revendication 1,
**caractérisé en ce que**
le conduit (16) de dérivation débouche, à son ouverture (28) de sortie, dans le tronçon (20) du conduit (10) disposé dans le sens de l'écoulement de l'air (14), en aval du ventilateur (13), et
l'élément (22) de fermeture est monté sur l'ouverture (28) de sortie du conduit (16) de dérivation.

3. Appareil (2) de refroidissement suivant l'une des revendications précédentes,
**caractérisé en ce qu'**
une section transversale d'ouverture de l'élément (22) de fermeture est réglable.

4. Appareil (2) de refroidissement suivant l'une des revendications précédentes,
**caractérisé en ce que**
l'élément (22) de fermeture est constitué d'un volet (24) de dérivation.

5. Appareil (2) de refroidissement suivant l'une des revendications précédentes,
**caractérisé en ce qu'**
il règne une pression (p₁) d'entrée dans le conduit (10), dans le sens de l'écoulement, en amont du condenseur (6), et il règne une pression (p₂) de sortie dans le conduit (10), dans le sens de l'écoulement, en aval du ventilateur (13),
dans lequel la pression (p₁) d'entrée s'applique d'un côté de l'élément (22) de fermeture, et la pression (p₂) de sortie s'applique de l'autre côté de l'élément (22) de fermeture.

6. Appareil (2) de refroidissement suivant l'une des revendications précédentes, qui est réalisé en appareil (40) de conditionnement d'air.

7. Véhicule (36), en particulier véhicule (38) ferroviaire, ayant un appareil (2) de refroidissement suivant l'une des revendications précédentes.

8. Véhicule (36) suivant la revendication 7,
**caractérisé par**
une unité (32) de commande, qui est agencée pour commander la position de l'élément (22) de fermeture en fonction d'une vitesse du véhicule (36).

9. Procédé pour faire fonctionner un appareil (2) de refroidissement,
qui a un évaporateur (4), un condenseur (6), un ventilateur (13) et un conduit (10) ayant une ouverture (12) d'admission,
dans lequel il est prescrit un sens d'écoulement de l'air (14) dans le conduit (10),
dans lequel le condenseur (6) est monté dans le conduit (10) et le ventilateur (13) est monté dans le conduit, dans le sens de l'écoulement de l'air (14), en aval du condenseur (6),
dans lequel, en passant par l'ouverture (12) d'admission, on envoie de l'air (14) de l'atmosphère ambiante au conduit (10) et dans le conduit (10),
un élément (22) de fermeture est monté dans un conduit (16) de dérivation de l'appareil (2) de refroidissement, et si l'élément (22) de fermeture est ouvert, on envoie de l'air (14) du tronçon (18) du canal (10) disposé, dans le sens d'écoulement de l'air (14), en amont du condenseur (6) par le conduit (16) de dérivation dans le tronçon (20) du canal (10) disposé, dans le sens d'écoulement de l'air (14), en aval du ventilateur (13),
l'air passant dans le conduit (16) de dérivation contourne le condenseur (6) et le ventilateur (13),
**caractérisé en ce que**
on ferme et/ou on ouvre l'élément (22) de fermeture
en fonction d'une différence de pression entre une pression (p₀) ambiante s'appliquant de l'extérieur à l'ouverture (12) d'admission et une pression (p₂) de sortie régnant dans le conduit (10), dans le sens de l'écoulement, en aval du ventilateur (13) et/ou
en fonction d'une différence de pression entre une pression (p₁) d'entrée régnant dans le conduit (10), dans le sens de l'écoulement, en amont du condenseur (6) et la pression (p₂) de sortie régnant dans le conduit (10), dans le sens de l'écoulement, en aval du ventilateur (13).

10. Procédé suivant la revendication 9,
**caractérisé en ce qu'**
on réduit, si l'élément (22) de fermeture est ouvert, le courant (14) d'air, qui passe dans le ventilateur (13).

11. Procédé suivant l'une des revendications 9 ou 10,
**caractérisé en ce qu'**
à l'ouverture de l'élément (22) de fermeture, on règle une section transversale d'ouverture de l'élément (22) de fermeture.
